# EUROPÄISCHE PATENTANMELDUNG

(11) **EP 0 803 175 A1**
(43) Veröffentlichungstag der Anmeldung: **29.10.1997**
(21) Anmeldenummer: 97106652.7
(22) Anmeldetag: 22.04.1997
(51) Int. Cl.: A01B 51/04

(54) **Transportrahmen für ein Bodenbearbeitungsgerät**

(30) Priorität: 22.04.1996 DE 29607258 U
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Transportrahmen (1) für die Aufnahme eines an einen Traktor anzuschließenden Bodenbearbeitungsgerätes (2), insbesondere für die Tiefenlockerung von Böden, das mit seinem Bodenbearbeitungswerkzeug zwischen einer bodennahen Arbeitsstellung und einer bodenfernen Transportstellung über eine Drei-Punkt-Anschlußausbildung (3, 4) höhenverstellbar ist. Um ein solches Bodenbearbeitungsgerät auch für den Fall, daß ein nur leichter und/oder schwach motorisierter Traktor zur Verfügung steht, sachgemäß Anheben zu können, zeichnet sich der Transportrahmen aus durch ein beidseits des aufzunehmenden Gerätes (2) angeordnetes Laufradpaar (11), durch eine Anbauvorrichtung (12), gegenüber der das Laufradpaar (11) höhenverstellbar abgestützt ist und die mit dem unteren Teil (3) der Drei-Punkt-Anschlußausbildung (3, 4) des Gerätes (2) verbindbar ist, und durch eine Deichsel (19) für den Anschluß an den Traktor, die an der Anbauvorrichtung (12) in vertikaler Ebene verschwenkbar gelagert ist und einen Anschlußteil (23) für die Verbindung mit dem oberen Teil (4) der Drei-Punkt-Anschlußausbildung (3, 4) des Gerätes (2) aufweist.

## Beschreibung

Die Erfindung betrifft einen Transportrahmen für die Aufnahme eines an einen Traktor anzuschließenden Bodenbearbeitungsgerätes, insbesondere für die Tiefenlockerung von Böden, das mit seinem Bodenbearbeitungswerkzeug zwischen einer bodennahen Arbeitsstellung und einer bodenfernen Transportstellung über eine Drei-Punkt-Anschlußausbildung höhenverstellbar ist.

Solche Geräte - beispielsweise ein 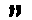 Bearbeitungsgerät für die Tiefenlockerung von Böden" gemäß WO 91/07076 - sind bestimmt für den direkten Anbau am Traktor (Zugfahrzeug) und zwar mittels einer Drei-Punkt-Aufnahmeausbildung, die vom Traktor aus höhenversetzbar ist, so daß das derart angeschlossene Bodenbearbeitungsgerät zwischen der Betriebsstellung und einer Transportstellung anhebbar ist. Das setzt jedoch voraus, daß der Traktor nach Motorleistung und Gewichtsverteilung in der Lage ist, das gesamte Gerät mittels der hydraulischen Drei-Punkt-Aufnahmeausbildung ordnungsgemäß und gefahrlos anzuheben.

Der Erfindung liegt die Aufgabe zugrunde, ein Bodenbearbeitungsgerät der eingangs genannten Art auch dann betreiben zu können, wenn ein nur leichter und/oder schwach motorisierter Traktor zur Verfügung steht, mit dem ein sachgemäßes Anheben im Falle des direkt angeschlossenen Bodenbearbeitungsgerätes nicht sichergestellt ist.

Diese Aufgabe wird erfindungsgemäß mit Hilfe eines Transportrahmens gelöst, der sich auszeichnet durch ein beidseits des aufzunehmenden Gerätes angeordnetes Laufradpaar, durch eine Anbauvorrichtung, gegenüber der das Laufradpaar höhenverstellbar abgestützt ist und die mit dem unteren Teil der Drei-Punkt-Anschlußausbildung des Gerätes verbindbar ist, und durch eine Deichsel für den Anschluß an den Traktor, die an der Anbauvorrichtung in vertikaler Ebene verschwenkbar gelagert ist und einen Anschlußteil für die Verbindung mit dem oberen Teil der Drei-Punkt-Anschlußausbildung des Gerätes aufweist.

Die höhenverstellbare Abstützung des Laufradpaares an der Anbauvorrichtung kann grundsätzlich durch jede Art von Abstandsänderung, beispielsweise geradliniges Versetzen des Laufradpaares gegenüber der Anbauvorrichtung, erfolgen, vorzugsweise wird dies erreicht, durch einen U-förmigen Rahmen aus einer Quertraverse und in deren Endbereichen beidseits des aufzunehmenden Gerätes abstrebend verlaufenden Schenkeln, an deren freien Enden Radlager für die Aufnahme des seitlich voneinander abgekehrt angeordneten Laufradpaares vorgesehen sind, welcher Rahmen an der Anbauvorrichtung um eine senkrecht zur Fahrtrichtung verlaufende Drehachse verschwenkbar gelagert und mittels einer an den Rahmen einerseits und der Anbauvorrichtung andererseits angreifenden Hubeinrichtung in verschiedene Verschwenkstellungen überführbar und in diesen arretierbar ist.

Vorzugsweise wird die Drehachse derart angeordnet, daß sie parallel zu der - vorzugsweise als Rohr ausgebildeten - Quertraverse des Rahmens durch Schwenklager verläuft, die an von der Quertraverse radial abragenden Auslegern gehalten sind. In weiterhin bevorzugter Ausführung greift die Hubeinrichtung an dem Rahmen über Schwenklager an, die ebenfalls in radial von der Quertraverse abragenden Auslegern gehalten sind, derart, daß die Kraft der Hubeinrichtung über einen Hebelarm zur Drehachse ausgeübt wird, so daß sich die Quertraverse und damit die an dieser fest angeordneten, das Laufradpaar tragenden Schenkeln um die Drehachse verschwenken. Als Hubeinrichtung dienen bevorzugt zwei hydraulische Kolben-Zylinder-Einrichtungen, kurz Hubzylinder bezeichnet. Dabei können das Schwenklager und das Drehlager an einem entsprechend zweiarmigen Ausleger der Quertraverse versetzt angeordnet sein, bei Verwendung zweier Hubzylinder in parallel beabstandeter Arbeitsrichtung in entsprechend parallel beabstandeter Anordnung zweier Ausleger, die jeweils mit einem Schwenklager und einem Drehlager ausgerüstet sind.

Entsprechend kann die Anbauvorrichtung zwei beidseitig der in Fahrtrichtung verlaufenden vertikalen Mittelebene des Rahmens gleich beabstandete Anbauteile aufweisen deren jedes eine Abstützlager für einen Hubzylinder, ein Deichsellager und ein Drehlager sowie eine Verbindungsausbildung für die Aufnahme einer der unteren Drei-Punkt-Anschlüsse aufweist und denen zwei mit Schwenklager und Drehlager versehene Ausleger an der Quertraverse entsprechend beabstandet zugeordnet sind.

In weiterhin bevorzugter Ausführung ist die Deichsel zu der Anbauvorrichtung aus den beiden Anbauteilen gesehen entsprechend gabelförmig gespreizt ausgebildet und im Aufspreizbereich mit einem die Gabeläste verbindenden Dom versehen, dessen Querverbindung dem Anschlußteil für die Verbindung mit dem oberen Teil der Drei-Punkt-Anschlußausbildung des Gerätes aufweist. Vorzugsweise ist dabei die Verbindung zwischen dem oberen Teil der Drei-Punkt-Anschlußausbildung des Gerätes und dem Anschlußteil der Deichsel längenveränderlich einstellbar, insbesondere als Spannschloß ausgebildet. Die Anordnung der Lager an den beiden Einbauteilen ist bevorzugt derart getroffen, daß das Drehlager, das Deichsellager und das Abstützlager in vertikaler Ebene übereinander angeordnet sind, wobei das Deichsellager die mittlere Position einnimmt.

Bevorzugte Ausführungen der Erfindung ergeben sich aus den Unteransprüchen, insbesondere in Bezug auf das in der Zeichnung wiedergegebene Ausführungsbeispiel, dessen nachstehende Beschreibung die Erfindung näher erläutert. Es zeigen:
- Figur 1.: eine schematisierte Seitenansicht eines Transportrahmens mit in diesem aufgenommenen Bodenbearbeitungsgerät;
- Figur 2.: eine schematisierte Draufsicht auf den Transportrahmen gemäß Figur 1 jedoch hinsichtlich des aufzunehmenden Bodenbearbeitungsgerätes nur durch den unteren Teil dessen Drei-Punkt-Anschlußausbildung angedeutet.

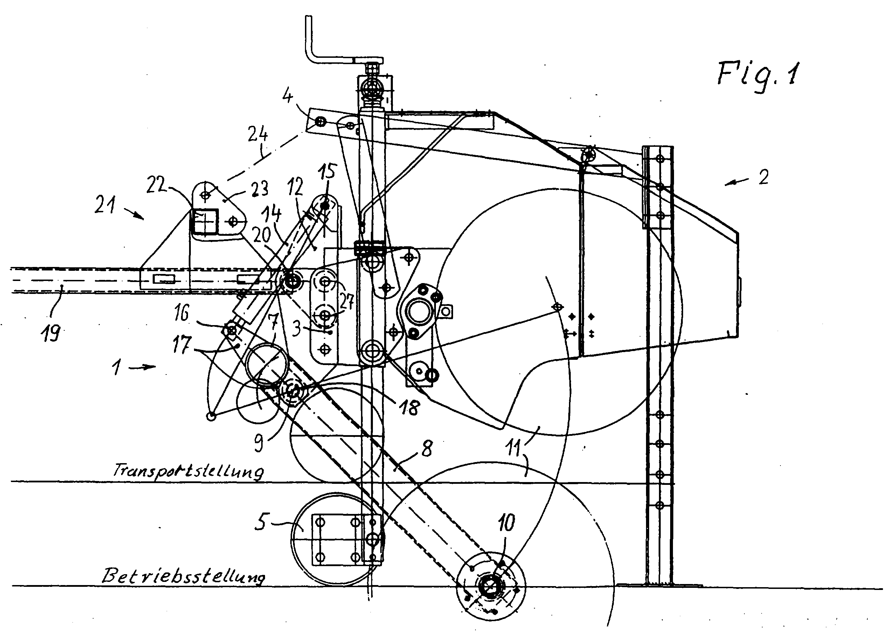

In den insgesamt mit 1 bezeichneten Transportrahmen ist das insgesamt mit 2 bezeichnete Bodenbearbeitungsgerät aufgenommen, beispielsweise ein solches wie in der WO 91/07076 beschrieben, worauf Bezug genommen wird, und in Figur 1 nur ansatzweise in einer Abstellsituation gezeigt. Das Gerät 2 ist mit einer Drei-Punkt-Anschlußausbildung 3, 4 ausgerüstet, das in bekannter Weise einen mittig angeordneten oberen Teil 4 und zwei symmetrisch zur vertikalen Mittelebene beabstandete Anschlüsse als unteren Teil 3 umfassen, die in symmetrisch zur vertikalen Ebene plattenförmig ausgebildet sind und jeweils mehrere in vertikaler Richtung übereinander angeordnete Anschlußösen 27 aufweisen. Das Gerätechassis ist mit einer Abstützwalze 5 versehen, mit der das Gerät in der Betriebsstellung an dem zu bearbeitenden Boden abgestützt ist. Bei Anschluß der Drei-Punkt-Anschlußausbildung 3, 4 direkt an eine Drei-Punkt-Aufnahmeausbildung eines entsprechend starken bzw. schweren Traktors ist das Gerät 2 aus der gezeichneten Betriebsstellung für den Transport oder dergleichen anhebbar, wie durch den oberhalb der Abstützwalze 5 gezeichneten gleich großen Kreis angedeutet. Bei dem hier zugrundegelegten Fall eines schwach motorisierten/leichten Traktors, der lediglich die erforderliche Zugkraft, nicht jedoch die Ausrüstung und Eigenschaften für das Anheben des Gerätes besitzt, wird der Transportrahmen 1 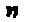 zwischengeschaltet".

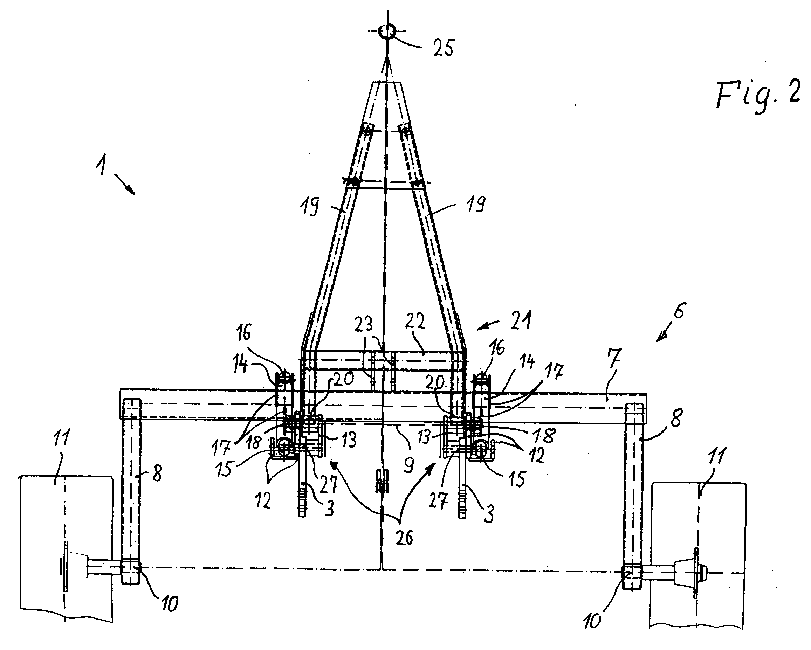

Der Transportrahmen 1 weist einen U-förmigen Rahmen 6 aus einer Quertraverse 7 - hier als Rohr ausgebildet - und an dessen Enden radial abstehende Schenkeln auf, die sich bei aufgenommenem Gerät zu dessen beiden Seiten erstrecken und an ihren der Quertraverse 7 abgewandten Enden mit Radlagern 10 für ein Laufradpaar 11 versehen sind, wie dies insbesondere Figur 2 erkennen läßt.

Der Rahmen 6 ist im unteren Bereich einer Anbauvorrichtung aus zwei zur vertikalen Mittelebene symmetrisch beabstandeten Anbauteilen 12 um eine Drehachse 9 verschwenkbar in entsprechenden an den Anbauteilen 12 angeordneten Drehlagern 18 gehalten. Die Anbauteile 12 sind mit jeweils zwei der Anschlußösen 27 des unteren Teils 3 der Drei-Punkt-Anschlußausbildung 3, 4 des Gerätes 2 über entsprechende Bohrungen verdrehfest verbunden bzw. anzuschließen, wie dies insgesamt mit 26 bezeichnet ist.

Desweiteren sind im oberen Bereich der Anbauteile 12 jeweils Abstützlager 15 angeordnet, in denen die einen Enden von Hubzylindern 14 angelenkt sind, deren andere Enden in Schwenklager 16 eingreifen, die an von der Quertraverse 7 radial in Gegenrichtung zu den Schenkeln 8 abstrebenden Auslegern 17 angeordnet sind. Bei Betätigen der sowohl auf Druck als auch auf Zug beanspruchbaren Hubzylinder 14 verschwenkt der Rahmen 6 um die Drehachse 9, und zwar wie durch Kreisbogenabschnitte angedeutet, derart, daß das Laufradpaar 11 in eine Arbeitsstellung vom zu bearbeiteten Boden nach oben versetzt - Vollkreiswiedergabe - und eine auf den Boden zu hinsichtlich der Auflage über diejenige der Abstützwalze 5 hinausgehende Transportstellung - Teilkreiswiedergabe - verschwenkbar sind, in der demzufolge das Gerät 2 aus seiner Betriebsstellung vom Boden abgehoben ist und durch die nunmehr das Gerät tragenden Laufräder transportiert werden kann.

Desweiteren sind die Anbauteile 12 mit einem jeweils etwa mittig zwischen Abstützlager 15 und Drehlager 18 angeordneten Deichsellager 20 versehen, um die die in diesem Anlenkbereich gabelförmig gespreizt ausgebildete Deichsel 19 schwenkbar gehalten ist. Die Achsen sämtlicher Lager verlaufen parallel zueinander. Zur Bildung bzw. Aufnahme der Deichsellager 20 sind den Anbauteilen 12 Gegenstücke 13 parallel zugeordnet, die ebenfalls im Bereich 26 mit den Anbauteilen 12 über die Anschlußösen 27 am unteren Teil 3 der Drei-Punkt-Anschlußausbildung 3, 4 festgelegt sind. Die Deichsel 19 ist in ihrem gabelförmig gespreizten Endbereich mit einem Deichseldom 21 versehen, der die gespreizten Deicheslarme übergreifend verbindet und aus zwei diesem zugeordneten Wangen sowie einer Querverbindung 22 zwischen diesen besteht - hier ausgebildet als Vierkantrohr - an der mittig ein Anschlußteil 23 abragt. Das Teil 23 ist mit dem oberen Teil 4 der Drei-Punkt-Anschlußausbildung 3, 4 des Gerätes 2 mittels eines Spannschlosses 24 verbunden, wie gestrichelt angedeutet. Mit Hilfe des Spannschlosses läßt sich die Lage der Deichsel 19 mit ihrer Deichselöse 25 auf die Deichselankupplung des Traktors ausrichten.

In Betriebsstellung ist das Gerät 2 durch entsprechendes Hochverschwenken des Laufradpaares 11 über seine Abstützwalze 5 vom Boden getragen und durch die aufgrund der Spannschloßeinstellung definierten Ausrichtung der Deichsel 19 an dem Traktor abgestützt. Für den Übergang in die Transportlage werden die Hubzylinder 14 auf Zug aktiviert und verschwenken den Rahmen 6 in die wiedergegebene Verschwenklage der Schenkel 8, wodurch mit zunehmendem Angriff des Laufradpaares 11 am Boden das Gerät 2 von diesem abgehoben in die Transportstellung überführt wird, in der das Gerät 2 von dem Laufradpaar 11 getragen und über die Deichsel 19 und die Deichselankupplung des Traktors mit diesem verbunden verfahren werden kann; die Deichselankupplung des Traktors kann die auftretende Neigung der Deichsel aufnehmen.

## Patentansprüche

1. Transportrahmen (1) für die Aufnahme eines an einen Traktor anzuschließenden Bodenbearbeitungsgerätes (2), insbesondere für die Tiefenlockerung von Böden, das mit seinem Bodenbearbeitungswerkzeug zwischen einer bodennahen Arbeitsstellung und einer bodenfernen Transportstellung über eine Drei-Punkt-Anschlußausbildung (3, 4) höhenverstellbar ist,
**gekennzeichnet durch**
ein beidseits des aufzunehmenden Gerätes (2) angeordnetes Laufradpaar (11), durch eine Anbauvorrichtung (12), gegenüber der das Laufradpaar (11) höhenverstellbar abgestützt ist und die mit dem unteren Teil (3) der Drei-Punkt-Anschlußausbildung (3, 4) des Gerätes (2) verbindbar ist, und durch eine Deichsel (19) für den Anschluß an den Traktor, die an der Anbauvorrichtung (12) in vertikaler Ebene verschwenkbar gelagert ist und einen Anschlußteil (23) für die Verbindung mit dem oberen Teil (4) der Drei-Punkt-Anschlußausbildung (3, 4) des Gerätes (2) aufweist.

2. Transportrahmen nach Anspruch 1,
**gekennzeichnet durch**
einen U-förmigen Rahmen (6) aus einer Quertraverse (7) und in deren Endbereichen beidseits des aufzunehmenden Gerätes (2) abstrebend verlaufenden Schenkeln (8), an deren freien Enden Radlager (10) für die Aufnahme des seitlich voneinander abgekehrt angeordneten Laufradpaares (11) vorgesehen sind, welcher Rahmen (6) an der Anbauvorrichtung (12) um eine senkrecht zur Fahrtrichtung vertaufende Drehachse (9) verschwenkbar gelagert und mittels einer an den Rahmen (6) einerseits und der Anbauvorrichtung (12) andererseits angreifenden Hubeinrichtung (14) in verschiedene Verschwenkstellungen überführbar und in diesen arretierbar ist.

3. Transportrahmen nach Anspruch 2,
**dadurch gekennzeichnet,**
daß die Drehachse (9) durch in Auslegern (17) der Quertraverse (7) angeordnete Drehlager (18) verläuft.

4. Transportrahmen nach Anspruch 2 oder 3,
**dadurch gekennzeichnet,**
daß die Hubeinrichtung (14) rahmenseitig in einem an der Quertraverse (7) angeordneten Schwenklager (16) gehalten ist.

5. Transportrahmen nach einem der Ansprüche 2 bis 4,
**dadurch gekennzeichnet,**
daß die Hubeinrichtung als Kolbenzylinder-Einrichtung, insbesondere in Form zweier hydraulischer, in beiden Hubrichtungen arbeitender Hubzylinder, ausgebildet ist.

6. Transportrahmen nach einem der Ansprüche 1 bis 5,
**dadurch gekennzeichnet,**
daß Schwenklager (16) und Drehlager (18) an einem entsprechend zweiarmigen Ausleger (17) der Quertraverse (7) seitlich zu dieser versetzt angeordnet sind.

7. Transportrahmen nach Anspruch 5 oder 6,
**dadurch gekennzeichnet,**
daß die Anbauvorrichtung aus zwei beidseitig der in Fahrtrichtung verlaufenden vertikalen Mittelebene des Rahmens (6) gleich beabstandeten Anbauteilen (12) besteht, deren jedes ein Abstützlager (15) für einen Hubzylinder (14), ein Deichsellager (20) und ein Drehlager (18) sowie eine Verbindungsausbildung (26) für die Aufnahme einer der unteren Drei-Punkt-Anschlüsse (3) aufweist und denen zwei mit Schwenklager (16) und Drehlager (18) versehene Ausleger (17) an der Quertraverse (7) entsprechend beabstandet zugeordnet sind.

8. Transportrahmen nach einem der Ansprüche 1 bis 7,
**dadurch gekennzeichnet,**
daß die Deichsel (19) zu der Anbauvorrichtung aus den beiden Anbauteilen (12) gesehen entsprechend gabelförmig gespreizt ausgebildet und im Aufspreizbereich mit einem die Gabeläste verbindenden Dom (21) versehen ist, dessen Querverbindung (22) den Anschlußteil (23) für die Verbindung mit dem oberen Teil (4) der Drei-Punkt-Anschlußausbildung (3, 4) des Gerätes (2) aufweist.

9. Transportrahmen nach Anspruch 8,
**dadurch gekennzeichnet,**
daß die Verbindung zwischen dem oberen Teil (4) der Drei-Punkt-Anschlußausbildung (3, 4) des Gerätes (2) und dem Anschlußteil (23) der Deichsel (19) längenveränderlich einstellbar, insbesondere als Spannschloß (24) ausgebildet ist.

10. Transportrahmen nach einem der Ansprüche 1 bis 9,
**dadurch gekennzeichnet,**
daß jedes der beiden Anbauteile (12) das Drehlager (18), das Deichsellager (20) und das Abstützlager (15) in vertikaler Ebene übereinander angeordnet aufweist, wobei das Deichsellager (20) die mittlere Position einnimmt.
